Europäisches Patentamt

European Patent Office

Office européen des brevets

(19)

(11) Veröffentlichungsnummer: **0 017 960 B1**

(12) **EUROPÄISCHE PATENTSCHRIFT**

(45) Veröffentlichungstag der Patentschrift:
29.09.82

(51) Int. Cl.³: **B 23 Q 1/26,** F 16 C 29/00

(21) Anmeldenummer: 80102019.9

(22) Anmeldetag: 15.04.80

(86) Internationale Anmeldenummer:
PCT/Lf I /

(54) **Kombinierte Wälz-/Gleitführung als Geradführung.**

(30) Priorität: 21.04.79 DE 2916280

(43) Veröffentlichungstag der Anmeldung:
29.10.80 Patentblatt 80/22

(45) Bekanntmachung des Hinweises auf die Patenterteilung:
29.09.82 Patentblatt 82/39

(84) Benannte Vertragsstaaten:
DE FR GB IT

(56) Entgegenhaltungen:
DE-A-2 346 633
DE-C-911 206
FR-A-1 412 731
FR-E-68 128
GB-A-872 262
GB-A-1 039 552
NL-C-79 409
US-A-2 111 471
US-A-2 343 243
US-A-2 870 801
US-A-3 046 704

(73) Patentinhaber: Carl Hurth Maschinen- und
Zahnradfabrik GmbH & Co, Moosacher Strasse 36,
D-8000 München 40 (DE)

(72) Erfinder: Fischer, Heinrich, Schildensteinstrasse 12,
D-8000 München 80 (DE)
Erfinder: Plekenbrink, Rolf, Dr., Mönchen-Werther
Strasse 29, D-4000 Düsseldorf (DE)
Erfinder: Spensberger, Johann, Watzmannstrasse 9/II,
D-8011 Poing (DE)

## Kombinierte Wälz-/Gleitführung als Geradführung

Die Erfindung betrifft eine kombinierte Wälz-/ Gleitführung als Geradführung eines an der Unterseite eines Auslegers od. dgl. hängend angebrachten Schlittens einer Werkzeugmaschine, der in horizontaler Richtung verschiebbar ist.

Im Werkzeugmaschinenbau sind Geradführungen üblich, die als reine Gleitführungen mit Schmierung im hydrodynamischen oder im Mischreibungs-Bereich ausgeführt sind. Als Gleitflächen sind sowohl Metall-/Metall- als auch Metall-/Kunststoff-Paarungen anzutreffen. Solche Führungen zeichnen sich aus durch ein sehr gutes Dämpfungsverhalten; nachteilig sind der relativ hohe Reibwert und ein häufig zu beobachtendes stick-slip-Verhalten. Diese Nachteile werden bei Geradführungen vermieden, die als öl- oder fettgeschmierte Wälzlagerungen ausgeführt sind. Derartige Wälzlagerungen weisen jedoch ein sehr geringes Dämpfungsverhalten auf.

Vielfach werden heute kombinierte Wälz-/ Gleitführungen angewendet, um die Vorteile der beiden Bauarten möglichst weitgehend auszunutzen ohne ihre Nachteile zu übernehmen. Bei den bekannten Ausführungen (vgl. E. Saljé: Elemente der spanenden Werkzeugmaschinen, Carl Hanser Verlag München, 1968, S. 53/55) werden geradlinig bewegbare Schlitten oder Tische auf dem Maschinenbett geführt. Für eine hängende Anordnung eines geradlinig bewegbaren Schlittens sind diese Führungen nicht verwendbar, da sie mit Spiel behaftet sind und der Schlitten unter dem Bearbeitungsdruck nach oben ausweichen würde. Neben diesen mit rein mechanischen Elementen arbeitenden Geradführungen werden im Werkzeugmaschinenbau mitunter auch aerostatische oder hydrostatische Führungen angewendet (DE-OS 2 346 633). Wollte man solche Führungen bei einer hängenden Anordnung eines geradlinig bewegbaren Schlittens vorsehen, so wäre eine völlig spielfreie Führung nur beim Betrieb der Maschine möglich, nicht aber bei abgeschalteter Pneumatik oder Hydraulik. Das Einstellen des Werkzeugs zum Werkstück wird dadurch erschwert. Daneben ist eine aerostatische oder hydrostatische Führung bei Feinbarbeitungsmaschinen, z.B. Schabmaschinen für die Zahnradfeinbearbeitung, vielfach unerwünscht, da bei einem Druckabfall während des Betriebes mit einer Zerstörung des teuren Werkzeuges gerechnet werden muss.

Von daher liegt der Erfindung die Aufgabe zugrunde, eine Geradführung zu entwickeln, die trotz hängender Anordnung des zu führenden verschiebbaren Maschinenteiles nicht nur ständig absolut spielfrei sondern auch vorgespannt sein soll. Daneben soll die Führung keinen stick-slip-Effekt und eine hohe Dämpfung aufweisen.

Die Aufgabe wird gelöst mit einer kombinierten Wälz-/Gleitführung, die die Merkmale des Hauptanspruches aufweist. Die spielfreie, vorgespannte Einstellung des Schlittens kann mit dem Merkmal des Anspruchs 2 noch verbessert werden. Mit dem für sich bekannten Merkmal des Anspruchs 3 kann die Wirkung der erfindungsgemässen Anordnung weiter verbessert werden, insbesondere dann, wenn man noch das Merkmal des Anspruchs 4 gleichzeitig anwendet.

Eine kombinierte Wälz-/Gleitführung für einen an einem Ausleger hängenden, horizontal beweglichen Schlitten einer Werkzeugmaschine ist aus einer Druckschrift «FRORIEP-Berichte», Bericht 9, 2. Ausgabe, November 1964, veröffentlicht von der Maschinenfabrik Froriep GmbH in Rheydt, bekannt. Abgesehen davon, dass dort keine reine hängende Anordnung des Schlittens gegeben ist (der Schlitten umgreift z.T. den Ausleger), erfolgt die Abstützung auch nicht über zwischen Führungsleisten aufgenommene Kugeln, sondern es sind dort Stahlleisten mit horizontalen und vertikalen Rollen vorgesehen. Es fehlt weiter die paarweise Anordnung gleicher Elemente. Ein weiterer, ganz entscheidender Unterschied zur vorliegenden Wälz-/Gleitführung liegt in der Wirkung der die Vorspannung erzeugenden Federn: Bei der bekannten Anordnung erfolgt eine Vorspannung nur in vertikaler Richtung, bei der erfindungsgemässen Anordnung jedoch gleichzeitig in horizontaler Richtung quer zur Bewegungsrichtung des Schlittens, und zwar dank der in den V-förmigen Nuten geführten Kugeln.

Die Erfindung wird im folgenden anhand eines Ausführungsbeispieles beschrieben, das in den Fig. 1 bis 4 dargestellt ist. Es zeigen

Fig. 1 eine Maschine, bei der die Erfindung anwendbar ist,

Fig. 2 einen Querschnitt durch die erfindungsgemässe Geradführung,

Fig. 3 einen Horizontalschnitt längs der Linie III-III in Fig. 2,

Fig. 4 eine Einzelheit aus Fig. 2 in grösserem Massstab.

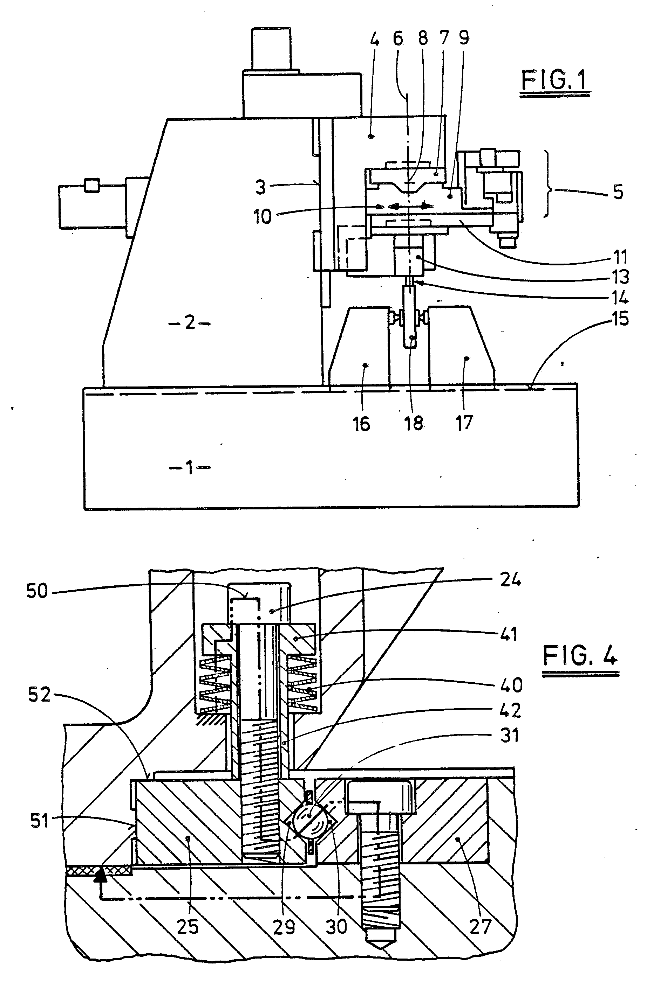

Als Beispiel einer Werkzeugmaschine, auf der die Erfindung anwendbar ist, ist in Fig. 1 eine Zahnradschabmaschine stark vereinfacht dargestellt, wie sie in dieser Ausführung noch nicht zum bekannten Stand der Technik gehört. Auf einem Maschinenbett 1 ist an einem Ende ein vertikaler Ständer 2 starr angebracht. An diesem Ständer 2 ist in einer zum freien Ende des Bettes 1 gerichteten senkrechten Geradführung 3 ein dieses Bettende überragender Vertikalschlitten 4 höhenverstellbar und antreibbar angeordnet. Die hierfür erforderlichen Einrichtungen sind, da sie für die Erfindung nicht von Bedeutung sind, nicht gezeichnet und brauchen nicht beschrieben zu werden. An seiner Unterseite trägt der Vertikalschlitten 4 einen sogenannten Einstellschlitten 5, der um eine vertikale Achse 6 schwenkbar ist. Der Einstellschlitten 5 ist unterteilt. Er besteht im wesentlichen aus einem beim Balligschaben um die Achse 6 schwenkbaren Oberteil 7, einem gegenüber diesem um eine horizontale Achse 8 schwenkbaren Unterteil 9. An letzterem hängt, gegenüber diesem in horizontaler Richtung 10 verschiebbar, ein Vorschubschlitten 11. Dieser Vorschubschlitten 11 ist mit einer erfindungsgemässen Geradführung im Unterteil 9 geführt und gehalten, worauf noch eingegangen wird. Nicht eingegangen wird dagegen auf die Einrichtungen zum Drehen des Oberteiles 7 um die Achse 6 und auf die Einrichtung 19 zum Schwenken des Unterteiles 9 um die Achse 8, da sie für die Erfindung ohne Bedeutung sind. An der Unterseite des Vorschubschlittens ist — wiederum um die vertikale Achse 6 schwenkbar — ein Werkzeugkopf 13 mit einem darin drehend antreibbar aufgenommenen Werkzeug, einem Schabrad 14, angebracht. Der Werkzeugkopf 13 mit dem Schabrad 14 führt zusammen mit dem Vorschubschlitten 11 die Längsbewegung in Richtung 10 aus. Auf dem Maschinenbett 1 sind in einer bekannten Führung 15 verschiebbare Reitstöcke 16, 17 zur Aufnahme eines Werkstücks 18 vorhanden.

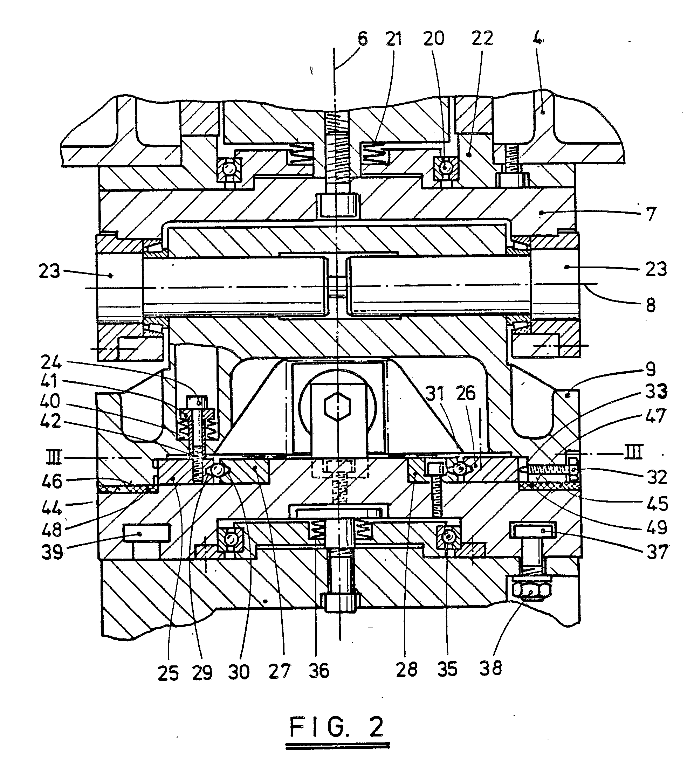

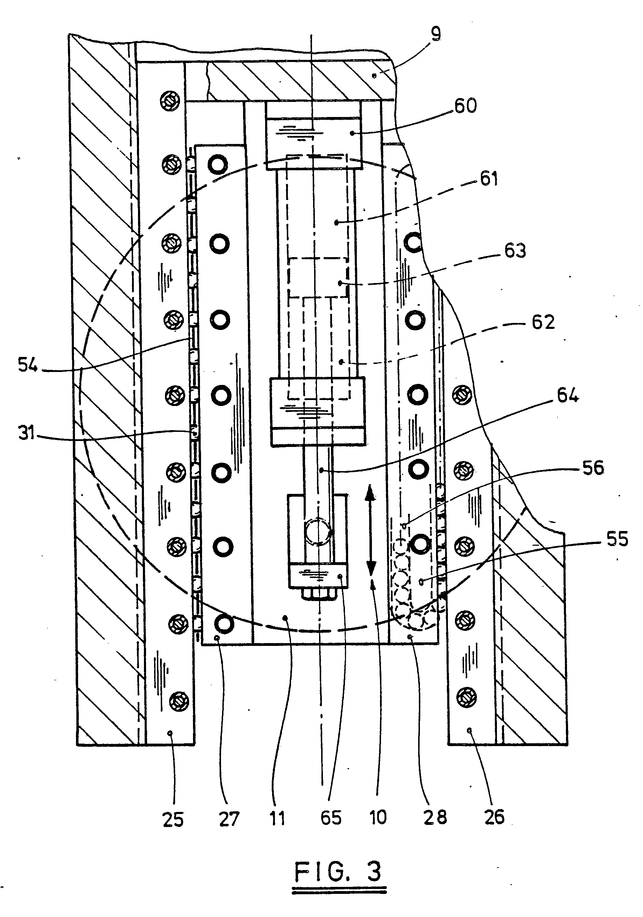

Der Einstellschlitten 5 und insbesondere der Vorschubschlitten 11 sind in den Fig. 2 und 3 im einzelnen dargestellt. In einer mit Tellerfedern 21 vorgespannten Rundführung 20 ist das Oberteil 7 in einem mit dem Vertikalschlitten 4 verschraubten Zentrierring 22 um die Achse 6 drehbar aufgenommen. Am Oberteil 7 sind Bolzen 23 befestigt, an denen das Unterteil 9 um eine Achse 8 schwenkbar angebracht ist. Der Einstellschlitten 5 bildet gewissermassen einen vom Ständer 2 ausgehenden Ausleger, an dem der Vorschubschlitten 11 hängt. In einer Vertiefung an der Unterseite des Unterteiles 9 sind mit mehreren Schrauben 24 erste Führungsleisten 25, 26 parallel und mit Abstand zueinander angeschraubt. Zwischen diesen ersten Führungsleisten 25, 26 sind mit geringem Abstand und parallel zu diesen zweite Führungsleisten 27, 28 vorgesehen, die mit dem Vorschubschlitten 11 fest verschraubt sind. Sowohl die ersten als auch die zweiten Führungsleisten 25, 26; 27, 28 weisen auf den mit geringem Abstand einander zugewendeten Längsseiten V-förmige Nuten 29, 30 auf, an deren Nutflanken käfiggeführte Kugeln 31 anliegen. Zum ersten spielfreien Einstellen der Kugeln an den Nutflanken sind Stellschrauben 32 vorgesehen, mit denen die Führungsleisten in horizontaler Richtung gegen die Kugeln gedrückt werden. Mit diesen Stellschrauben werden ausserdem die unvermeidlichen Fertigungstoleranzen der Führungselemente quer zur Bewegungsrichtung 10 ausgeglichen.

In einer weiteren, mit Tellerfedern 36 vorgespannten Rundführung 35 ist der Werkzeugkopf 13 im Vorschubschlitten 11 um die Achse 6 schwenkbar und mit Schrauben 37 und Muttern 38 in einer ringförmigen T-Nute 39 feststellbar aufgenommen. (Ähnliche Mittel können auch zum Feststellen des Oberteiles 7 gegenüber dem Vertikalschlitten 4 verwendet werden.)

Um ein durch die nach unten gerichtete Gewichtskraft von Vorschubschlitten 11, Werkzeugkopf 13 und aller damit verbundener Teile hervorgerufenes Spiel in den Kugelführungen 25, 31, 27; 26, 31, 28 auszuschalten, werden die Kugelführungen mit einer vertikal wirkenden Federkraft vorgespannt. Jede Schraube 24 der ersten Führungsleisten 25, 26 liegt mit ihrem Kopf über einem Federteller 41 auf einem Federpaket 40 auf, das sich am Zwischenteil 9 abstützt. Ein das Federpaket 40 durchdringender, den Schaft der Schraube 24 teilweise umhüllender rohrförmiger Ansatz 42 des Federtellers 41 ist in seiner Länge so bemessen, dass er auf der ersten Führungsleiste 25, 26 aufliegt und ein weiteres Vorspannen des Federpaketes 40 verhindert, wenn die Vorspannkraft aller Federpakete 40 gleich gross wie oder grösser als die besagte Gewichtskraft ist. Dadurch, dass die Federkraft auf die in den V-förmigen Nuten geführten Kugeln 31 wirkt, erfolgt eine spielfreie Einstellung des Schlittens sowohl in vertikaler Richtung als auch quer zur Bewegungsrichtung. Mit der Vorspannung der Federpakete 40 wird gleichzeitig eine spielfreie und vorgespannte Anlage der Gleitflächen 44, 45 des Vorschubschlittens 11 an den Gegenflächen 46, 47 des Zwischenteiles 9 erreicht. Dabei gehören zur Verringerung der Reibung die Gleitflächen 44, 45 zu Kunststoffstreifen 48, 49, die in entsprechenden Ausnehmungen des Vorschubschlittens 11 eingelegt sind. Statt der Kunststoffstreifen 48, 49 können auch aufgespritzte Kunststoffbeläge verwendet werden. Mit der Gleitflächen-Paarung Kunststoff/ Eisenwerkstoff kann auf eine Schmierung der Gleitflächen verzichtet werden. Dadurch sind die sonst im Mischreibungsbereich auftretenden stick-slip-Effekte ausgeschaltet, es erfolgt praktisch in allen Betriebszuständen ein gleichmässiges, ruckfreies Gleiten.

Wie der durch die Federvorspannung erzeugte Kraftverlauf erfolgt ist in Fig. 4 in grösserem Massstab dargestellt und mit 50 bezeichnet. Ein wichtiges Detail ist ebenfalls in Fig. 4 dargestellt. Beim Anziehen der Schrauben 24 gegen die Federkraft müssen sich die Führungsleisten 25, 26 bzw. ihre Nuten 29 entsprechend den Toleranzabweichungen der Teile 9, 11, 25, 26, 28, 48, 49 in vertikaler Richtung einstellen können. Die Führungsleiste 25 liegt deshalb seitlich nur an einem schmalen, schneidenartigen Vorsprung 51 des Zwischenteiles 9 an. Nach oben erfolgt eine Anlage über eine ebenfalls schmale Fläche 52 einerseits und die Federteller-Ansätze 42 andererseits. Das erwähnte selbständige Einstellen erfolgt gewissermassen durch ein Kippen um eine etwa im schneidenartigen Vorsprung 51 verlaufende Achse. Bei der Führungsleiste 26 erfolgt das Einstellen in ähnlicher Weise, nur ist hier der Vorsprung 51 ersetzt durch Kuppen 33 od. dgl. der Stellschrauben 32.

Die Möglichkeit des selbständigen Einstellens der ersten Führungsleisten 25, 26 verbietet die Verwendung von Rollen, z.B. in Kreuzrollenketten, zwischen den ersten und den zweiten Führungsleisten, da die einander gegenüberliegenden Nutflanken nicht die erforderliche Parallelität aufweisen. Statt der erwähnten käfiggeführten Kugeln 31 in einem Flachkäfig 54 können auch andere Kugelführungen Anwendung finden. So können beispielsweise die zweiten Führungsleisten 27, 28 als Kugelumlaufschuhe ausgeführt werden, wie einer in Fig. 3 in der rechten Hälfte dargestellt und mit 55 bezeichnet ist. Dabei sind die Kugeln 31 in der Führungsleiste in einer in sich geschlossenen Umlaufbahn 56 geführt. An der der ersten Führungsbahn zugewendeten Seite ragen die Kugeln so weit aus der hier offenen Umlaufbahn heraus, dass sie an den Nutflanken der ersten Führungsbahn anliegen.

Obwohl sie für die Erfindung nicht von Bedeutung ist, ist in den Fig. 2 und 3 der Vollständigkeit halber die Einrichtung zum Längsverschieben des Vorschubschlittens 11 dargestellt. Am Zwischenteil 9 ist ein doppeltwirkender Hydraulikzylinder 60 befestigt. Sein zwischen den beiden Zylinderkammern 61, 62 sitzender Kolben 63 bewegt über die mit ihm fest verbundene Kolbenstange 64 und ein an dieser befestigtes Verbindungsstück 65 den Vorschubschlitten nach links oder nach rechts, je nachdem, ob die Zylinderkammer 62 oder 61 mit Druck beaufschlagt wird.

Die Erfindung ist nicht auf das beschriebene Anwendungsbeispiel beschränkt sondern ist auch bei anderen vergleichbaren Anordnungen von Schlitten od. dgl. anwendbar. Die Erfindung ist weiter nicht beschränkt auf die beschriebene Ausführung. Sie soll auch alle vergleichbaren unter die Schutzansprüche fallenden Möglichkeiten mit einschliessen.

## Patentansprüche

1. Kombinierte Wälz-/Gleitführung eines an einem Ausleger (5) od. dgl. hängend und horizontal beweglich angeordneten Schlittens (11) einer Werkzeugmaschine, mit horizontal verlaufender Gleitfläche (44, 45) an einer Schlittenoberseite, die mit einer Gleitfläche (46, 47) an der Unterseite des Auslegers (5) od. dgl. zusammenwirkt, sowie mit einer zwischen dem Ausleger (5) od. dgl. und dem Schlitten vorgesehenen Wälzführungsanordnung (25-31), mit der durch Einwirkung von vertikal nach oben wirkenden Federkräften die Gleitführung (44-47) vorgespannt und der Schlitten (11) unter Vorspannung horizontal geführt ist, dadurch gekennzeichnet, dass bei dem ausschliesslich unterhalb des Auslegers od. dgl. an diesem geführten Schlitten (11) die Gleitführungsflächen (44, 46; 45, 47) paarweise symmetrisch zur Schlittenlängsachse angeordnet sind, und dass die Wälzführungsanordnung (25-31) aus symmetrisch zur Schlittenlängsachse und neben den Gleitführungspaaren (44, 46; 45, 47) angeordneten Führungsleistenpaaren (25, 27; 26, 28) mit einander zugewandten V-förmigen Kugelführungsnuten (29, 30) bestehen, wobei horizontal, quer zur Verschieberichtung (10) des Schlittens (11) wirkende, aus den vertikal nach oben wirkenden Federkräften resultierende Kräfte vorhanden sind und wobei jeweils die eine Leiste (27, 28) mit dem Schlitten (11) fest verbunden ist und die jeweils andere Leiste (25, 26) am Ausleger od. dgl. (5), in einem für die Vorspannung durch die Federn (40) notwendigen Mass vertikal einstellbar befestigt ist.

2. Kombinierte Wälz-/Gleitführung nach Anspruch 1, dadurch gekennzeichnet, dass wenigstens eine (26) der beiden am Ausleger od. dgl. (5) befestigten Leisten von aussen horizontal quer zur Verschieberichtung (10) des Schlittens (11) gegen die am Schlitten befestigte Leiste (28) einstellbar ist, beispielsweise über seitlich anliegende Schrauben (32).

3. Kombinierte Wälz-/Gleitführung nach Anspruch 1 oder 2, dadurch gekennzeichnet, dass die jeweils zusammenwirkenden Gleitführungsflächen die Werkstoffpaarung Kunststoff/Eisenwerkstoff haben.

4. Kombinierte Wälz-/Gleitführung nach Anspruch 3, dadurch gekennzeichnet, dass die Gleitführungsflächen (44, 46; 45, 47) trocken, d.h. ohne Schmiermittel, arbeiten.

## Claims

1. A combined linear roller and slide bearing for a machine tool slide (11) suspended for horizontal motion from a cantilever member (5) or the like comprising a horizontally extending sliding surface (44, 45) provided on an upwardly facing side of said slide, said sliding surface cooperating with a sliding surface (46, 47) provided on the under side of said cantilever member (5) or the like and further comprising, disposed between said cantilever member (5) or the like and said slide, a roller guide arrangement (25-31) adapted to bias said sliding surfaces (44-47) through the application of vertically upwardly acting spring forces and adapted horizontally to guide said slide (11) subjected to biasing forces, characterized in that said slide (11), which is exclusively guided below said cantilever member or the like on said member has said sliding surfaces (44, 46; 45, 47) associated therewith in pairs which are arranged symmetrically in relation to the longitudinal axis of the slide, and that said roller guide arrangement (25-31) comprises, symmetrically disposed in relation to the longitudinal axis of the slide and alongside said pairs of sliding surfaces (44, 46; 45, 47), pairs of guide rails (25, 27; 26, 28) provided with Vee-shaped ball guide grooves (29, 30) facing one another, there existing forces resulting from the vertically upwardly acting spring forces and acting in a horizontal direction transversely of the direction (10) of sliding motion of said slide (11), one rail (27, 28) of each pair being rigidly connected to said slide (11), the other rail (25, 26) of each pair being mounted on said cantilever member (5) or the like in such a way as to be vertically adjustable to the extent required for the application of said bias by means of springs (40).

2. The combined linear roller and slide bearing of claim 1, characterized in that at least one rail (26) of the two rails mounted on said cantilever member (5) or the like is adepted to be adjusted, for example by means of screws (32) disposed in lateral contact therewith, from the outside in a horizontal direction transversely of the direction of motion (10) of said slide (11) in relation to the rail (28) mounted on said slide.

3. A combined linear roller an slide bearing as claimed in claim 1 or claim 2, characterized in that in each pair of cooperating sliding surfaces (44, 46; 45, 47) one surface is made of a plastics material, the other surface being made of a ferrous material.

4. The combined linear roller and slide bearing of claim 3, characterized in that said sliding surfaces (44, 46; 45, 47) are adapted to be operated in a dry condition, i.e. without the presence of a lubricant.

**Revendications**

1. Palier linéaire combiné comportant des roulements et des glissières, pour le coulisseau (11) d'une machine-outil, suspendu à un bras (5) du bâti ou analogue, et comportant une surface de glissement horizontale (44, 45) sur sa face supérieure, pour coopérer avec une surface de glissement (46, 47) prévue sur la face inférieure du bras (5), ainsi qu'un dispositif de guidage à roulement (25, 31) prévu entre le bras (5) et le coulisseau (11), avec lequel, par action de forces de ressort agissant verticalement vers le haut, le guidage de glissement (44, 47) est soumis à une tension préalable, et le coulisseau (11) est guidé horizontalement sous tension préalable, palier caractérisé en ce que, sur le coulisseau (11), guidé exclusivement sous le bras (5) et contre celui-ci, les surfaces de glissement (44, 46 et 35, 47) sont disposées par paire, symétiquement par rapport à l'axe longitudinal du coulisseau, le dispositif de guidage à roulement (25-31) consistant en paires de régles de guidage (25, 27 et 26, 28), symmétriques par rapport à l'axe longitudinal du coulisseau, disposées près des paires de guides de glissement (44, 46 et 45, 47), et présentant des orges de guidage de billes en forme de V, tournées l'une vers l'autre (29, 30), la disposition étant telle que des forces agissant horizontalement, transversalement à la direction de déplacement (10) du coulisseau (11), soient créées comme résultantes de forces de ressort agissant verticalement vers le haut, l'une des règles de guidage (27, 28) étant reliée rigidement au coulisseau (11), et l'autre (25, 26) étant fixée sur le bras (5) au analogue, de manière réglable en position, verticalement, dans la mesure nécessaire à créer la tension préalable par les ressorts (40).

2. Palier combiné suivant la revendication 1, caractérisé en ce qu'au moins l'une (26) des deux règles de guidage fixées au bras (5) est réglable en position, de l'extérieur, horizontalement, transversalement à la direction de déplacement du coulisseau (11), par rapport à l'autre règle (28) fixée au coulisseau, ce réglage ayant lieu notamment au moyen de vis (32) agissant latéralement.

3. Palier combiné suivant l'une des revendications 1 ou 2, caractérisé en ce que les surfaces de guidage de glissement coopérant entre elles présentent dans chaque paire, l'association matière synthétique et métal ferreux.

4. Palier combiné suivant la revendication 3, caractérisé en ce que les surfaces de guidage de glissement (44, 46 - 45, 47) fonctionnent à sec, c'est-à-dire sans produit lubrifiant.

FIG. 1

FIG. 4

0 017 960

FIG. 2

9

F I G. 3